# FASCICULE DE BREVET EUROPEEN

(11) **EP 1 056 305 B1**
(45) Date de publication et mention de la délivrance du brevet: **20.07.2005**
(21) Numéro de dépôt: 00401439.5
(22) Date de dépôt: 24.05.2000
(51) Int. Cl.: H04Q 7/38, H04B 7/26

(54) **Procédé de gestion d'un réseau de radiotéléphonie et équipement de communication pour la mise en oeuvre du procédé**
Verfahren zur Verwaltung eines Funknetzes und Kommunikationsvorrichtung zur Durchfürung des Verfahrens
Radio communication network management method and communication equipment to implement the method

(30) Priorité: 28.05.1999 FR 9906755
(43) Date de publication de la demande: 29.11.2000
(73) Titulaire: SAGEM SA, 75116 Paris (FR)
(72) Inventeur: LaFourcade Jumembo, Alec, Seattle, WA 98112 (US)
(74) Mandataire: Bloch, Gérard

(56) Documents cités:
- EP-A- 0 827 295
- WO-A-99/14885

## Description

Les réseaux radiotéléphoniques fonctionnent en général en partage de temps sur une porteuse, c'est-à-dire qu'une trame temporelle cyclique comporte un nombre déterminé de voies temporelles qui sont affectées à diverses communications.

On peut par exemple citer le réseau de radiotéléphonie cellulaire DCS; on peut encore citer les réseaux locaux à la norme DECT, dans lesquels une base radio relie entre eux des combinés et est en outre reliée à un réseau téléphonique commuté. On considère ici le raccordement de telles bases DECT à des réseaux de radiotéléphonie cellulaire, comme par exemple le réseau DCS. On verra par la suite que la portée de la présente demande n'a pas de raison d'être limitée à se strict problème originel.

Il se pose donc un problème de compatibilité radio quand on intègre les circuits d'un combiné de radiotéléphonie cellulaire, à une base ou un terminal DECT. Dans ce cas, les circuits du combiné cellulaire sont perturbés en réception par les émissions dans les voies temporelles actives des trames DECT, ces circuits étant très sensibles pour avoir la portée voulue, et les gammes de fréquences des réseaux DECT et DCS étant très proches les unes des autres. De ce fait, si une communication de radiotéléphonie cellulaire et une communication locale coexistent pour relier un combiné DECT au réseau DCS, la communication de radiotéléphonie cellulaire est perturbée. Précisément, comme le réseau DCS fonctionne avec une trame cyclique de voies temporelles, de période différente de celle du réseau DECT, il se produit un glissement entre les trames des deux réseaux et une collision temporelle intervient périodiquement entre la voie temporelle d'émission DECT et la voie temporelle de réception DCS. Cela dégrade la qualité de la communication de façon inacceptable.

La présente invention vise à résoudre ce problème de compatibilité entre deux réseaux radio, que ce soit pour les relier l'un à l'autre, ou simplement pour insensibiliser l'un des réseaux vis-à-vis des émissions de l'autre.

Le document WO 9914885 enseigne un procédé de gestion d'un réseau de radiotéléphonie, dans lequel une pluralité de terminaux disposent pour leurs communications, dans chaque sens, de trames temporelles comprenant, chacune, une suite de voies contiguës et dans lequel on affecte à chaque terminal, pour chaque sens de communication, deux voies de trame non contiguës.

Ainsi, les voies temporelles associées à un terminal offrent une redondance pour une même communication et on peut donc couper l'émission dans l'une de ces voies si l'on prévoit qu'une telle émission serait concomitante avec une émission d'un autre réseau radio. L'espacement des voies temporelles associées permet en outre de réduire, ou même de supprimer, le risque de collision temporelle entre toutes celles-ci et une émission de l'autre réseau.

Toutefois, quand le réseau considéré se trouve à portée radio d'un autre réseau téléphonique radio aussi à voies temporelles de communication, le procédé de l'art antérieur ne permet pas d'éviter la collision avec les émissions de cet autre réseau qui se trouve ainsi perturbé.

L'invention de la présente demande vise à résoudre ce problème.

Ainsi, l'invention de la présente demande concerne un procédé tel que revendiqué à la revendication 1.

Avantageusement, on affecte à chaque terminal deux voies temporelles espacées d'au moins deux voies.

Il est ainsi formé un motif de quatre voies temporelles, limité à chaque extrémité par les deux voies temporelles associées. Si un autre réseau radio, par exemple DCS, présente une durée de voie temporelle un peu supérieure à celle d'une voie temporelle du réseau géré selon l'invention, par exemple le réseau DECT, une voie temporelle DCS peut au plus s'étendre sur une voie temporelle DECT et déborder sur les deux voies adjacentes. De ce fait, un ensemble limité à trois voies DECT adjacentes est affecté par la collision, tandis que la quatrième voie, à une extrémité du motif, reste disponible.

On peut en particulier réserver en permanence à la communication deux voies avec un espacement prédéterminé.

La gestion de l'affectation des voies temporelles est ainsi très simple puisque leur affectation à une même communication est fixe.

De façon alternative, on peut réserver, dans la trame du réseau, un bloc de voies, prédéterminé, limité par deux voies d'extrémité espacées, et on associe temporairement l'une des voies d'extrémité à une voie externe au bloc lorsque cette dernière présente un risque de collision temporelle avec une voie temporelle de l'autre réseau.

Il s'agit dans ce cas d'une gestion dynamique de l'affectation du bloc de voies à la communication qui doit changer de voie par risque de collision. Le bloc de voies constitue ainsi une ressource commune de secours, utilisée en partage de temps, pour laquelle le nombre de voies à réserver est indépendant du nombre des communications et donc, en proportion par rapport à la trame, plus limité que dans le cas précédent. Les voies de secours sont en commun et on rend ainsi maximal le pourcentage des voies restantes pour l'établissement des communications.

L'invention sera mieux comprise à l'aide de la description suivante d'un mode de mise en oeuvre préféré du procédé de l'invention, en référence au dessin annexé sur lequel :
- la figure 1 représente schématiquement un réseau téléphonique radio local DECT, relié au réseau de radiotéléphonie cellulaire DCS, comportant un équipement de communication mettant en oeuvre le procédé,
- la figure 2, formée des figures 2A et 2B, représente, en fonction du temps t, une trame temporelle DECT (fig. 2A) et deux trames temporelles DCS (fig. 2B), et
- la figure 3, formée des figures 3A et 3B, représente de même des suites des trames de la figure 2 et des collisions entre voies temporelles.

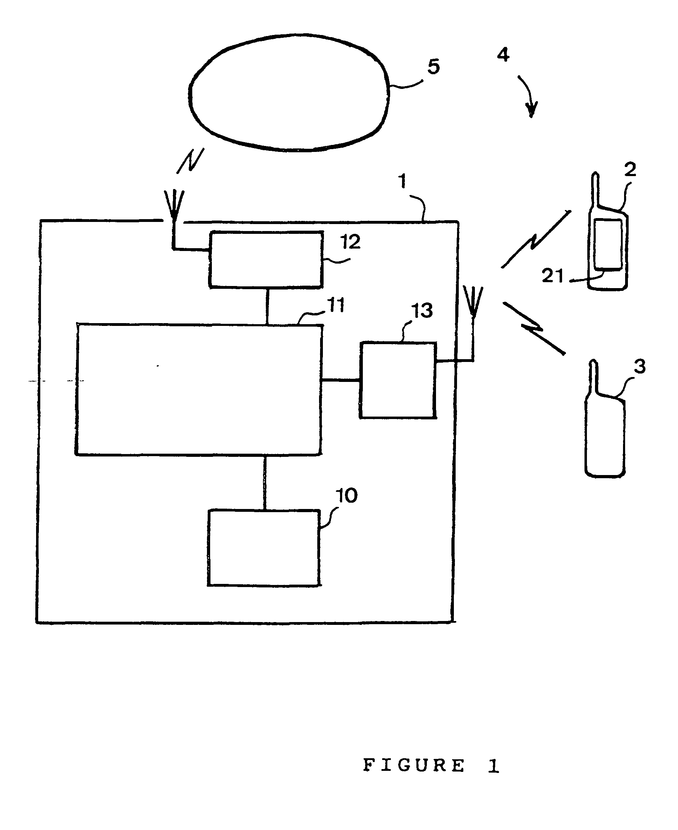

L'équipement de communication référencé 1 sur la figure 1 est une base qui constitue le coeur d'un réseau radio téléphonique local 4 comportant des terminaux ou combinés radio 2, 3. Le réseau DCS 5 est relié au réseau local DECT 4, par la base 1 dans cet exemple. Celle-ci comporte une unité centrale à microprocesseur 11 associée à un circuit d'horloge 10 et reliée à des circuits radio 12 de liaison avec le réseau DCS 5 et à des circuits radio 13 de liaison avec les combinés 2, 3.

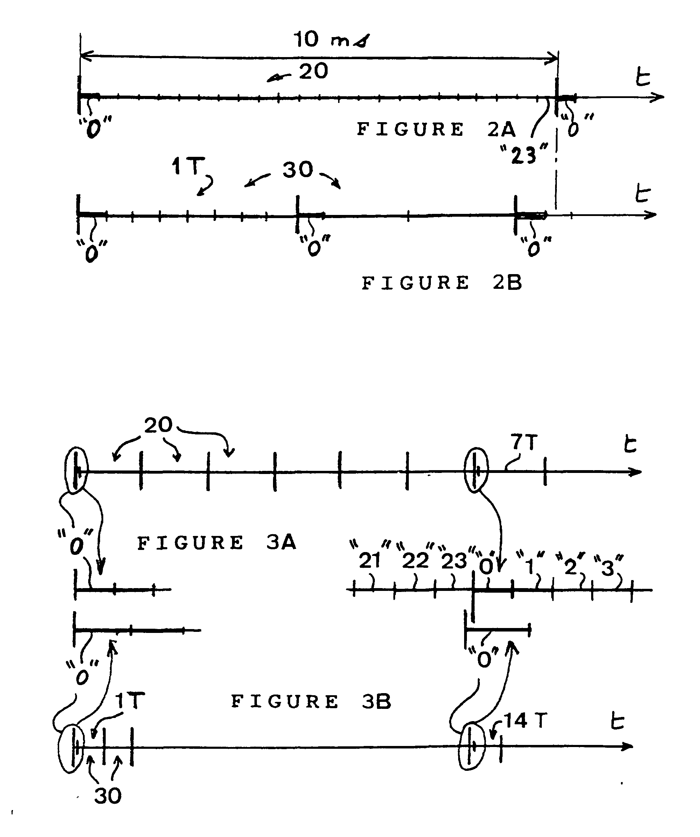

La base 1 émet cycliquement une trame 20 (fig. 2A) comportant 24 voies temporelles monodirectionnelles contiguës, numérotées de 0 à 23, les voies 0 à 11 servant aux émissions "aller" de la base 1 vers les combinés téléphoniques 2, 3 et les voies 12 à 23 servant aux émissions "retour" dans l'autre sens, des combinés 2, 3 vers la base 1. La trame DECT 20 a une durée de 10 ms et ses voies temporelles ont donc chacune 417 µs de durée. Les combinés 2, 3 détectent des signalisations émises par la base 1 dans une voie temporelle déterminée et s'asservissent en fréquence sur la période de répétition de ces signaux, pour repérer le rang de la voie temporelle courante et ainsi émettre et recevoir des signaux phoniques dans la voie temporelle, une dans chaque sens de communication, qui leur a été affectée en début d'une communication.

Les circuits 12 fonctionnent, vis-à-vis du réseau DCS 5, selon le même principe que les combinés 2, 3 vis-à-vis de la base 1, c'est-à-dire s'asservissent en rythme trame 30 sur le réseau DCS 5. La trame 30 de ce dernier a une période de 4,615 ms pour 8 voies temporelles, soit donc 577 µs par voie temporelle. Cette durée est donc supérieure à celle d'une voie temporelle DECT et est précisément comprise entre N et N+1 voies temporelles DECT, avec N= 1 dans cet exemple particulier de réseaux.

La gamme de fréquences DCS, dans laquelle est choisie une porteuse parmi plusieurs possibles, s'étend de 1810 à 1880 MHz, tandis que la gamme DECT s'étend de 1881 à 1897 MHz. Elles sont donc très proches l'une de l'autre, avec seulement 1 MHz d'écart. Comme les circuits radio 12 sont très sensibles en réception, pour avoir la portée voulue, les émissions DECT de la base 1 et éventuellement des combinés 2, 3 sont détectées par les circuits radio DCS 12 et une communication externe avec le réseau DCS 5 risquerait donc d'être perturbée en réception par cette interférence.

Afin de pouvoir éviter une interférence entre réseaux 4, 5, on affecte à chaque combiné 2, 3, deux voies au moins de la trame 20 non contiguës, donc espacées les unes des autres d'un certain nombre de voies. C'est l'unité centrale 11 qui effectue cette opération et celles qui suivent. Dans cet exemple, on se limite à l'association de deux voies.

Pour des raisons indiquées plus loin, les deux voies temporelles associées non contiguës, affectées à chaque combiné 2, 3, sont espacées d'au moins deux voies dans cet exemple.

Pour l'attribution de deux voies temporelles non contiguës à un combiné 2, 3, l'unité centrale 11 tient à jour une table d'occupation des voies temporelles de la trame 20. Les combinés 2, 3 comportent une unité centrale, comme celle référencée 21 du combiné 2, qui émet par radio un message de requête de l'établissement d'une communication, lorsque l'utilisateur du combiné 2 actionne une touche de "décrochage". A réception de cette requête, l'unité centrale 11 recherche deux voies temporelles libres dans la table ci-dessus et espacées et transmet par radio leurs numéros de rang attribués à l'unité centrale 21, qui les mémorise dans une table, par exemple rangs "0" et "3" en sens aller et rangs "12" et "15" en sens retour.

L'unité centrale 21 relie des circuits radio classiques auxquels elle est associée, non représentés et semblables aux circuits 13, à des circuits codeurs-décodeurs. Ces derniers restituent en analogique, acoustique, des signaux phoniques numériques reçus en sens aller et, en sens retour, numérisent des signaux phoniques à émettre vers la base 1.

L'unité centrale 21 assure la communication dans chaque sens dans deux voies non contiguës de chaque trame temporelle 20 du réseau DECT 4.

Dans le sens aller, l'unité centrale 21 lit la sortie réception des circuits radio associés pour recevoir et mémoriser les signaux des deux voies aller, jumelées, d'une même communication. Les signaux phoniques des deux voies aller sont comparés à un motif mémorisé localement de bits de voie temporelle au repos (tout à zéro par exemple). L'unité centrale 21 transmet aux circuits de décodage ci-dessus les signaux phoniques d'une des deux voies aller ci-dessus qui diffèrent du motif et qui sont donc valables. Les signaux de l'autre voie aller, identiques au motif (cas d'une collision prévue) ou différents du motif et donc alors identiques à ceux de l'autre voie, ne sont pas transmis aux circuits de décodage. En d'autres termes, l'unité centrale 21 sélectionne la voie active (cas de collision) ou l'une des deux voies actives et alimente les circuits décodeurs par les signaux de parole correspondants.

Dans le sens retour, l'unité centrale 21 lit la sortie des circuits de codage et émet deux fois les signaux phoniques correspondants, dans les deux voies de retour respectives jumelées attribuées au combiné 2. Lorsqu'elle prévoit une collision, l'unité centrale 11 de la base 1 émet un message de signalisation pour inhiber l'émission radio du combiné 2 dans l'une des voies retour. En pareil cas, l'unité centrale 21, ayant reçu ce message, ne commande l'émission des signaux phoniques que dans l'autre voie temporelle retour. L'émission en sens retour sur les deux voies reprend automatiquement à partir de la trame suivante ou, en variante, sur réception d'un message d'autorisation provenant de l'unité centrale 11. En variante, il peut être prévu que l'unité centrale 21 commande dans tous les cas l'émission dans les deux voies retour si les circuits radio du combiné 2 sont suffisamment éloignés des circuits radio DCS 12 et ne risquent pas de les perturber en réception.

Toujours en variante, si les circuits radio 12, de liaison du réseau DECT 4 avec le réseau DCS 5, étaient implantés dans le combiné 2 et non dans la base 1, ce seraient les émissions jumelées de celle-ci qui pourraient éventuellement être toujours maintenues.

Pour la fonction d'interphonie, assurant le transit d'une communication entre deux terminaux 2, 3, l'unité centrale 11 de la base 1 fonctionne selon les principes ci-dessus. Pour le transit, l'unité centrale 11 reçoit les signaux des deux voies retour du combiné 2 et les réémet sur deux voies aller du combiné 3, en inhibant l'émission sur l'une des voies en cas de prévision de collision avec une émission provenant du réseau DCS 5.

Plus précisément, ici, dans l'unité centrale 11, le réseau DECT 4 étant à portée radio du réseau DCS 5,
- on saisit une suite d'instants d'émission, fournis par le circuit d'horloge 10, des voies temporelles associées, affectées au combiné 2, 3, dans le réseau DECT 4 et une suite d'instants d'émission de voies temporelles dans le réseau DCS 5,
- on détermine, par extrapolation de chaque suite, des instants prévisionnels d'émission des voies temporelles considérées,
- on compare les instants prévisionnels des deux suites et, si une collision temporelle est ainsi prévue pour une des voies temporelles associées,
- on inhibe toute émission dans cette voie temporelle de la trame DECT 20.

Dans cet exemple, la base 1 étant asservie par le réseau DCS 5, elle ne peut éviter la collision que par action sur le réseau local DECT 4.

Dans un autre exemple, il pourrait être prévu d'agir sur l'affectation de voie temporelle dans l'une ou l'autre des trames 20, 30.

La figure 3 illustre le procédé, la figure 2 en étant la représentation agrandie de la partie de gauche. On suppose qu'une communication est établie entre le combiné 2 et un terminal du réseau DCS 5 à travers une voie temporelle (et une autre espacée) de la trame DECT 20 en série avec une voie temporelle de la trame DCS 30, la base 1 servant de relais. Pour simplifier l'exposé, on suppose ici qu'il s'agit des deux voies temporelles DECT et DCS de rangs respectifs zéro dans leur trame respective 20, 30. La voie de rang "0" (et l'autre voie espacée) de la trame DECT correspondent aux transmission "aller" de la base 1 vers le combiné 2, la voie de rang "12" (et une autre voie espacée) servant aux transmission "retour" de sens opposé. L'explication détaillée suivante porte sur la transmission "aller" vers le combiné 2, la transmission "retour" étant gérée selon le même principe que celle vers le combiné 2.

Une trame DECT 20 équivaut à un peu plus de 17 voies temporelles DCS (9,809 ms). Si l'on suppose, toujours pour simplifier l'exposé, que les trames des deux réseaux 4, 5 (trame 1T) ont un même instant de début sur les fig. 3A et 3B, la première voie temporelle, de rang "0", de la troisième trame DCS 30 (trait horizontal renforcé en partie droite de la fig. 2B s'achève avant le début (trait d'axe vertical) de la première voie temporelle de rang "0"de la deuxième trame DECT. Il n'y a donc alors pas de collision.

A mesure que s'écoule le temps t (fig. 3), le glissement entre les voies temporelles de rang zéro des deux trames 20, 30 se poursuit. Au bout de treize trames DCS 30, il s'est écoulé 59,995 ms. La voie temporelle de rang zéro de la quatorzième trame DCS 30, 14T, va donc recouvrir totalement la voie temporelle de rang "0" de la septième trame DECT 20, 7T, et recouvrir partiellement les deux voies temporelles (rang "23", rang "1") qui encadrent cette voie temporelle de rang "0", comme le montre la représentation à échelle de temps dilatée, à mi-hauteur à droite de la figure 3. En pareil cas, l'unité centrale 11 prévoit un tel recouvrement, et donc une collision, d'après l'extrapolation dans chacune des deux suites des instants d'émission, c'est-à-dire ici les suites des émissions des circuits DECT 13 dans la voie de rang "0" de la trame DECT 20 et la suite des émissions provenant du réseau DCS 5 au cours desquelles les circuits radio DCS 12 sont donc récepteurs et sensibles aux interférences. L'unité centrale 11 affecte alors l'autre voie temporelle associée au combiné 2 dans la trame DECT 20, ici toute voie temporelle de rang compris entre "3" et "11", inclus. L'espacement mutuel, de deux voies au moins, entre la voie DECT de rang "0" ici utilisée et la voie espacée associée de rang "3" à "11" garantit contre le risque de collisions simultanées entre une voie DCS et les deux voies DECT de rangs "0" et "3" associées.

Le changement de voie temporelle utilisée peut être éphémère, en revenant alors à la voie temporelle d'origine de rang "0" dès que le risque de collision a disparu. On peut cependant conserver la nouvelle voie temporelle de rang "3" et ne l'abandonner pour revenir à l'autre que lorsqu'elle présentera un risque de collision.

On peut ainsi réserver en permanence à chaque communication, dans le réseau DECT 4, deux voies temporelles avec un espacement prédéterminé d'au moins N+1, ici 2, voies temporelles, par exemple les voies de rangs "0" et "3". On évite ainsi, à chaque fois, la tâche de recherche et d'affectation d'une voie temporelle libre, ce qui limite la charge de l'unité centrale 11. Si une collision est prévue sur l'une des deux voies réservées associées, on interrompt l'émission DECT sur celle-ci. Dans cet exemple, comme on l'a constaté, une voie temporelle DCS ne peut entrer en collision qu'avec trois voies temporelles DECT successives et, de ce fait, le bloc des quatre voies de rangs "0" à "3" de cet exemple comporte avec certitude au moins une voie exempte de risque de collision. Le réseau DECT 4 peut alors traiter six communications simultanées, au lieu de douze dans un cas classique.

Dans une variante, on réserve, dans la trame du réseau DECT 4, un bloc de voies, prédéterminé, limité par deux voies d'extrémité mutuellement espacées, et on associe temporairement l'une des voies d'extrémité à une voie externe au bloc lorsque cette dernière présente un risque de collision temporelle avec une voie temporelle du réseau DECT 5. En d'autres termes, on réserve, dans le réseau DECT 4, deux voies temporelles, séparées par au moins N voies temporelles, à titre de voies de secours pour les communications utilisant les voies temporelles restantes de sa trame 20 et, si une collision est prévue pour l'une de ces dernières, on identifie au moins l'une des deux voies temporelles réservées exempte de risque de collision et on y fait passer temporairement la communication considérée, à l'exclusion de l'autre des deux voies réservées.

On peut ainsi réserver, comme voies temporelles communes dans la trame DECT 20, les voies de rangs "9" et "11" (et de rangs "21" et "23" pour le retour vers la base 1) car une collision ne peut affecter à la fois ces deux voies DECT communes et une autre voie, même accolée, comme expliqué ci-dessus. On peut alors traiter neuf communications DECT simultanées. On peut aussi prévoir d'utiliser la (ou les) N voies temporelles (ici de rangs "10" et "22") séparant les deux voies réservées, c'est-à-dire qu'on associe, à la voie temporelle externe au bloc, l'une quelconque des voies du bloc.

Comme suggéré au début, le circuit 12 de liaison avec le réseau DCS 5 pourrait en variante être dans un combiné 2, 3 compatible avec les deux réseaux 4, 5, ceux-ci n'étant éventuellement pas reliés mais produisant des interférences de l'un au moins des réseaux sur l'autre.

Le procédé de l'invention s'applique même dans le cas où il y a plusieurs communications par trame 20 et/ou 30, l'unité centrale 11 tenant à jour une table ou carte temporelle des voies temporelles acheminant des communications dans chaque trame 20, 30 pour prédire les collisions dans les trames futures à partir de celles qui se sont déjà écoulées.

## Revendications

1. Procédé de gestion d'un réseau de radiotéléphonie (4), dans lequel une pluralité de terminaux (2, 3) disposent pour leurs communications, dans chaque sens, de trames temporelles (20) comprenant, chacune, une suite de voies contiguës et dans lequel on affecte à chaque terminal (2, 3), pour chaque sens de communication, deux voies de trame (20) non contiguës, procédé **caractérisé par le fait que**, le réseau (4) étant à portée radio d'un autre réseau téléphonique radio (5) aussi à voies temporelles de communication,
- on saisit une suite d'instants d'émission des voies temporelles associées affectées à chaque terminal (2, 3) dans le réseau (4) et une suite d'instants d'émission de voies temporelles dans l'autre réseau (5),
- on détermine, par extrapolation de chaque suite, des instants prévisionnels d'émission des voies temporelles considérées,
- on compare les instants prévisionnels des deux suites et, si une collision temporelle est ainsi prévue pour une ("0") des voies temporelles associées ("0", "3"),
- on inhibe toute émission dans cette voie temporelle ("0") de la trame (20).

2. Procédé selon la revendication 1, dans lequel on affecte à chaque terminal deux voies temporelles ("0", "3") espacées d'au moins deux voies.

3. Procédé selon l'une des revendications 1 et 2, dans lequel on réserve, dans la trame (20) du réseau (4), un bloc de voies, prédéterminé, limité par deux voies d'extrémité espacées, et on associe temporairement l'une des voies d'extrémité à une voie externe au bloc lorsque cette dernière présente un risque de collision temporelle avec une voie temporelle de l'autre réseau (5).

4. Procédé selon la revendication 3, dans lequel on associe, à la voie temporelle externe au bloc, l'une quelconque des voies du bloc.

5. Procédé selon l'une des revendications 1 et 2, dans lequel, on réserve en permanence, à la communication d'un terminal (2, 3), deux voies ("0", "3") présentant un espacement prédéterminé.

## Patentansprüche

1. Verfahren zur Verwaltung eines Funktelefonnetzes (4), bei dem eine Vielzahl von Terminals (2, 3) für ihre Kommunikationen in jede Richtung über Zeitrahmen (20) verfügen, welche jeweils eine Abfolge von aneinandergrenzenden Kanälen aufweisen, und bei dem jedem Terminal (2, 3) für jede Kommunikationsrichtung zwei nicht aneinandergrenzende Rahmenkanäle (20) zugewiesen werden,
**dadurch gekennzeichnet,**
**daß**, da das Netz in Funkreichweite eines weiteren Funktelefonnetzes (5) liegt, das ebenfalls Zeitkanäle (5) für die Kommunikation aufweist,
- eine Abfolge von Sendezeitpunkten der zugeordneten, jedem Terminal (2, 3) zugewiesenen Zeitkanäle in dem einen Netz (4) und eine Abfolge von Sendezeitpunkten von Zeitkanälen in dem anderen Netz (5) erfaßt werden,
- durch Extrapolieren jeder Abfolge voraussichtliche Sendezeitpunkte der betrachteten Zeitkanäle bestimmt werden,
- die voraussichtlichen Zeitpunkte der beiden Abfolgen verglichen werden, und im Falle einer solcherart vorhergesehenen zeitlichen Kollision für einen Zeitkanal ("0") der zugeordneten Zeitkanäle ("0", "3"),
- jegliche Sendung auf diesem Zeitkanal ("0") des Rahmens (20) unterdrückt wird.

2. Verfahren nach Anspruch 1,
bei dem jedem Terminal zwei Zeitkanäle ("0", "3") zugewiesen werden, die um mindestens zwei Kanäle voneinander beabstandet sind.

3. Verfahren nach einem der Ansprüche 1 oder 2,
bei dem im Rahmen (20) des Netzes (4) ein vorgegebener Block von Kanälen reserviert wird, der durch zwei voneinander beabstandete äußerste Kanäle begrenzt ist, und einer der äußersten Kanäle vorübergehend einem Kanal von außerhalb des Blockes zugeordnet wird, wenn dieser letztere die Gefahr einer zeitlichen Kollision mit einem Zeitkanal des anderen Netzes (5) aufweist.

4. Verfahren nach Anspruch 3,
bei dem dem Kanal von außerhalb des Blockes ein beliebiger der Kanäle des Blockes zugeordnet wird.

5. Verfahren nach einem der Ansprüche 1 oder 2,
bei dem für die Kommunikation einem Terminal (2, 3) permanent zwei Kanäle ("0", "3") reserviert werden, die einen vorgegebenen Abstand aufweisen.

## Claims

1. Method of managing a radiotelephony network (4) whereby a number of terminals (2, 3) have for their communications, in each direction, temporal frames (20), each comprising a series of continuous channels, and whereby have been allocated to each terminal (2, 3), for each direction of communication, two non-contiguous channels of the frame (20), a method **characterised in that** the network (4) being in radio range of another radiotelephony network (5) also with communication temporal channels,
- a series of transmission moments of the associated temporal channels is acquired, allocated to each terminal (2, 3) in the network (4) and a series of moments of transmission of temporal channels in the other network (5),
- by extrapolation from each series, forecast moments of transmission of the temporal channels in question are determined,
- the forecast moments of the two series are compared and if a temporal collision is thus envisaged for one ("0") of the associated temporal channels ("0", "3"),
- any transmission m this temporal channel ("0") of the frame (20) is inhibited.

2. Method according to Claim 1 whereby two temporal channels ("0", "3"), spaced by at least two channels, is allocated to each terminal.

3. Method according to one of the Claims 1 and 2 whereby, m the frame (20) of the network (4) there is reserved a predetermined block of channels, limited by two spaced end channels, and one of the end channels is temporanly associated with a channel outside the block when there is a nsk of that channel being in temporal collision with a temporal channel of the other network (5).

4. Method according to Claim 3 whereby any one of the channels in the block is associated with the temporal channel outside the block.

5. Method according to one of the Claims 1 and 2 whereby two channels ("0", "3") with predetermined spacing are permanently reserved for the communication of a terminal (2, 3).
